# EUROPEAN PATENT SPECIFICATION

(11) **EP 4 668 807 B1**
(45) Date of publication and mention of the grant of the patent: **28.10.2026**
(21) Application number: 23942659.6
(22) Date of filing: 25.06.2023
(51) Int. Cl.: H04W 8/24, H04W 8/22, H04W 8/00, H04W 76/14, H04W 72/25, H04W 72/40, H04L 5/00, H04W 72/04, H04W 72/51, H04W 92/18

(54) **METHOD AND APPARATUS FOR DETERMINING TERMINAL TYPE, TERMINAL, CHIP, AND STORAGE MEDIUM**
VERFAHREN UND VORRICHTUNG ZUR BESTIMMUNG DES ENDGERÄTETYPS, ENDGERÄT, CHIP UND SPEICHERMEDIUM
PROCÉDÉ ET APPAREIL DE DÉTERMINATION DE TYPE DE TERMINAL, TERMINAL, PUCE ET SUPPORT DE STOCKAGE

(43) Date of publication of application: 24.12.2025
(73) Proprietor: GUANGDONG OPPO MOBILE TELECOMMUNICATIONS CORP., LTD., Dongguan, Guangdong 523860 (CN)
(72) Inventor: WANG, Hao, Dongguan, Guangdong 523860 (CN); MA, Teng, Dongguan, Guangdong 523860 (CN)
(74) Representative: Aldridge, Henry Alexander
(86) International application number: PCT/CN2023/102087
(87) International publication number: WO 2025/000124

(56) References cited:
- WO-A1-2022/170610
- WO-A1-2023/283790
- CN-A- 113 873 465
- CN-A- 115 708 375
- US-A1- 2023 051 928
- FUJITSU: "Device type definition and how to signal the device type to network", 3GPP DRAFT; R2-2009008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20201101, 23 October 2020 (2020-10-23), Mobile Competence Centre ; 650, route des Lucioles ; F-06921 Sophia-Antipolis Cedex ; France , XP051942053

## Description

### TECHNICAL FIELD

Embodiments of the disclosure relate to the technical field of sidelink communication, in particular to a method and apparatus for determining terminal type, a terminal, a chip, and a storage media.

### BACKGROUND

Reduced capability (RedCap) is a new technology defined by the 3rd generation partnership project (3GPP). During the discussions on the sidelink in unlicensed spectrum (SL-U) project, it is assumed that all terminals possess the same capabilities, without considering the reduced capability terminals. However, the cost and power consumption of terminal are critical metrics for commercial deployment. The low cost and reduced power consumption introduced by reduced capability terminals can provide a convenient pathway for the commercialization of SL-U technology. Therefore, the introduction of reduced capability terminals into the sidelink (SL) system should be considered.

After introducing reduced capability terminals into the sidelink system, it is necessary to study how other terminals can identify these reduced capability terminals.

The document WO2022170610A1 discloses a method of wireless communication by a first user equipment (UE), including: sending, to a second UE, an indication indicating a UE type for sidelink communication. The method further includes performing sidelink commumcations with the second UE in accordance with the indicated UE type.

The document WO2023283790A1 discloses a terminal recognition method which includes: a first terminal receives a first message by means of a sidelink, the first message is a message, which is sent by a second terminal before same performs capability information exchange with the first terminal by means of the sidelink; and recognizes the terminal type of the second terminal according to the first message, the terminal type comprises a reduced-capability terminal.

The invention is defined in the appended claims.

### SUMMARY

The embodiments of the disclosure provide a method and apparatus for determining terminal type, a terminal, a chip, a computer readable storage medium, a computer program product, and a computer program.

In a first aspect, an embodiment of the disclosure provides a method for determining terminal type according to claim 1 and further detailed in the dependent claims referring back to this claim.

In a second aspect, an embodiment of the disclosure provides a method for determining terminal type according to claim 4.

In a third aspect, an embodiment of the disclosure provides an apparatus for determining terminal type according to claim 5.

In a fourth aspect, an embodiment of the disclosure provides an apparatus for determining terminal type according to claim 6. The apparatus is applied to a second terminal and includes a receiving unit.

In a fifth aspect, an embodiment of the disclosure provides a terminal according to claim 7.

In a sixth aspect, an embodiment of the disclosure provides a chip according to claim 8.

In a seventh aspect, an embodiment of the disclosure provides a computer-readable storage medium according to claim 9.

With the technical solution of the embodiments of the disclosure, the terminal may explicitly indicate that the terminal is a reduced capability terminal by sending first information, and/or the terminal may implicitly notify that the terminal is a reduced capability terminal by sending a specific first signal on a specific first time unit. In this way, other terminals may recognize that the type of the terminal is a reduced capability terminal, thereby ensuring that the reduced capability terminal can operate normally in the sidelink system.

### BRIEF DESCRIPTION OF THE DRAWINGS

The accompanying drawings illustrated herein are intended to aid in further understanding of the disclosure and form part of the disclosure. The schematic embodiments of the disclosure and their descriptions are provided for explaining the disclosure, and do not constitute an undue limitation of the disclosure. In the accompanying drawings:

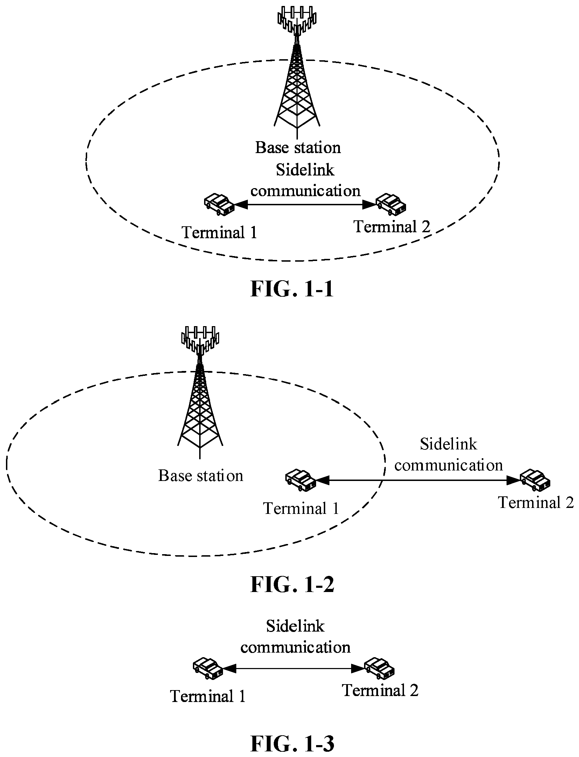

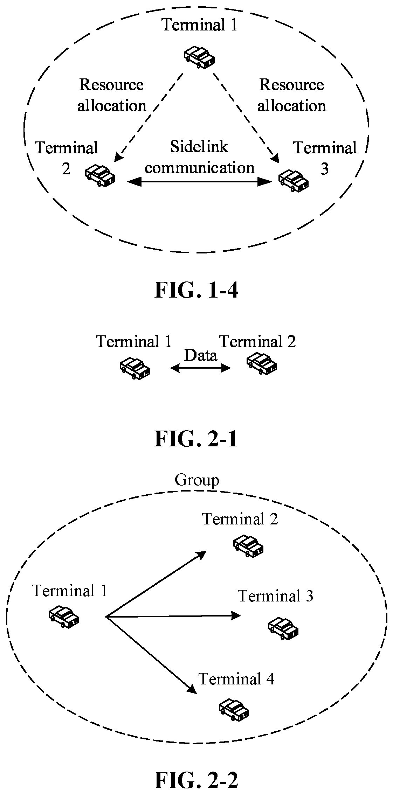

FIG. 1-1 is a schematic diagram of sidelink communication within network coverage according to an embodiment of the disclosure.
FIG. 1-2 is a schematic diagram of sidelink communication with partial network coverage according to an embodiment of the disclosure.
FIG. 1-3 is a schematic diagram of sidelink communication outside network coverage according to an embodiment of the disclosure.
FIG. 1-4 is a schematic diagram of sidelink communication with a central control node according to an embodiment of the disclosure.
FIG. 2-1 is a schematic diagram of unicast transmission mode according to an embodiment of the disclosure.
FIG. 2-2 is a schematic diagram of multicast transmission mode according to an embodiment of the disclosure.

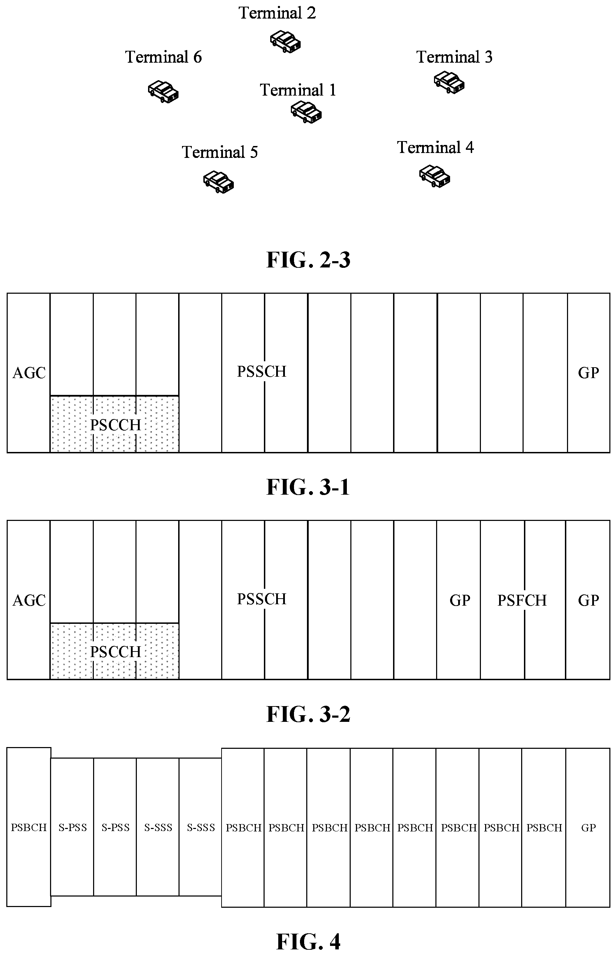

FIG. 2-3 is a schematic diagram of broadcast transmission mode according to an embodiment of the disclosure.
FIG. 3-1 is a first schematic diagram of a NR-V2X frame structure according to an embodiment of the disclosure.
FIG. 3-2 is a second schematic diagram of the NR-V2X frame structure according to an embodiment of the disclosure.
FIG. 4 is a structural diagram of a sidelink synchronization signal block (S-SSB) slot according to an embodiment of the disclosure.

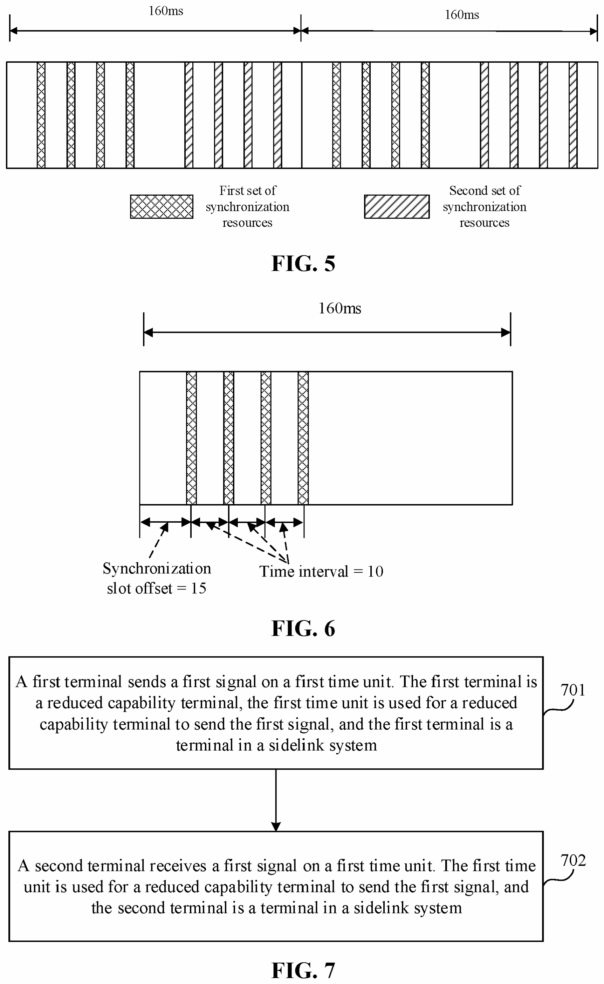

FIG. 5 is a schematic diagram of NR-V2X synchronization resources according to an embodiment of the disclosure.
FIG. 6 is a schematic diagram of a set of synchronization resources within a synchronization period according to an embodiment of the disclosure.
FIG. 7 is a schematic flowchart of a method for determining terminal type according to an embodiment of the disclosure.

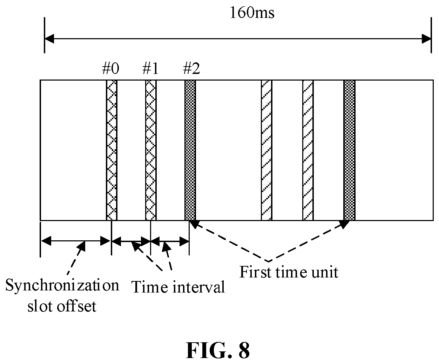

FIG. 8 is a first schematic diagram of configuration of a first time unit according to an embodiment of the disclosure.

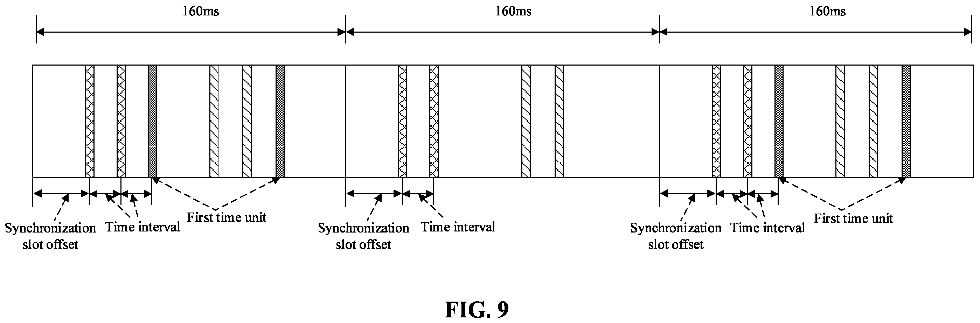

FIG. 9 is a second schematic diagram of the configuration of the first time unit according to an embodiment of the disclosure.

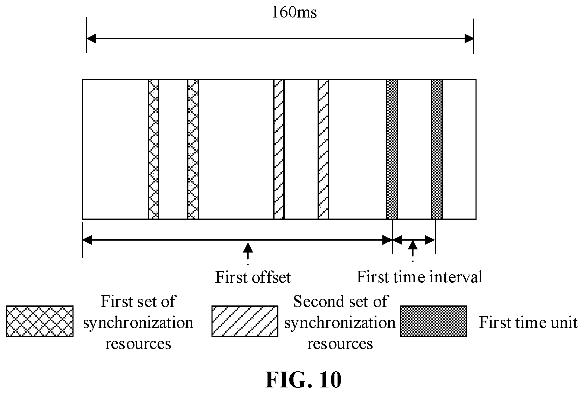

FIG. 10 is a third schematic diagram of the configuration of the first time unit according to an embodiment of the disclosure.

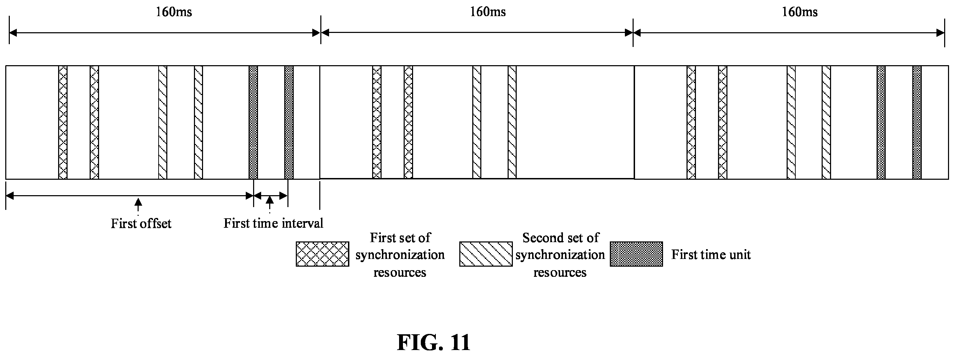

FIG. 11 is a fourth schematic diagram of the configuration of the first time unit according to an embodiment of the disclosure.

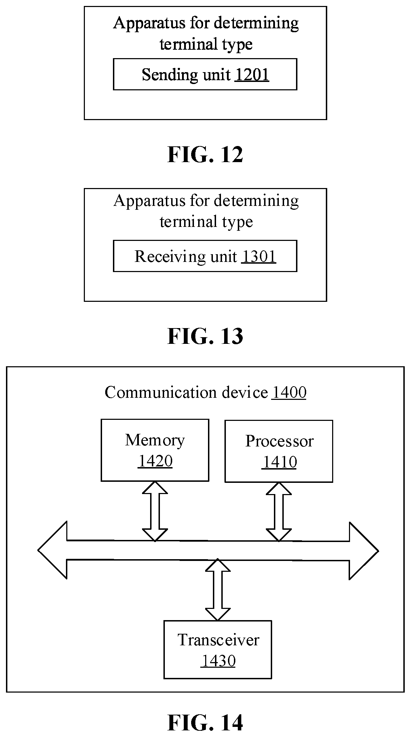

FIG. 12 is a first schematic diagram of the compositional structure of an apparatus for determining terminal type according to an embodiment of the disclosure.
FIG. 13 is a second schematic diagram of the compositional structure of the apparatus for determining terminal type according to an embodiment of the disclosure.
FIG. 14 is a schematic structural diagram of a communication device according to an embodiment of the disclosure.

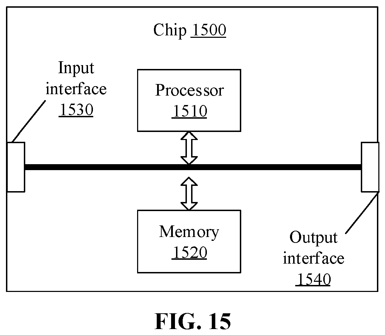

FIG. 15 is a schematic structural diagram of a chip according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of, but not all of, the embodiments in the disclosure. Based on the embodiments in the disclosure, all other embodiments obtained by those of ordinary skilled in the art without making any creative effort fall within the scope of protection of the disclosure.

The technical solution in the embodiments of the disclosure may be applied to various sidelink communication systems (which may also be briefly referred to as sidelink systems). For facilitate understanding of the technical solutions in the embodiments of the disclosure, the related technologies of the sidelink communication systems will be elaborated below. The following related technologies, as optional solutions, may be arbitrarily combined with the technical solutions in the embodiments of the disclosure, and all of them fall within the scope of protection of the embodiments of the disclosure.

### Sidelink communication under different network coverage environments

Based on the network coverage conditions of terminals performing communication, sidelink communication can be classified into the following types: sidelink communication within network coverage, sidelink communication with partial network coverage, sidelink communication outside network coverage, and sidelink communication with a central control node, as illustrated in FIG. 1-1, FIG. 1-2, FIG. 1-3, and FIG. 1-4, respectively.

As illustrated in FIG. 1-1, for the sidelink communication within the network coverage, all terminals performing sidelink communication (such as terminals 1 and 2 in FIG. 1-1) are within the coverage of the same base station. Therefore, all of the above terminals may perform sidelink communication based on the same sidelink configuration by receiving configuration signaling from the base station.

As illustrated in FIG. 1-2, for the sidelink communication with the partial network coverage, some terminals performing sidelink communication (such as a terminal 1 in FIG. 1-2) are within the coverage of the base station, and these terminals may receive configuration signaling from the base station, and perform sidelink communication based on the configuration of the base station. The terminal (such as a terminal 2 in FIG. 1-2) outside the network coverage does not receive the configuration signaling from the base station. In this case, the terminal outside the network coverage is configured to determine sidelink configuration based on the pre-configuration information and information carried in the physical sidelink broadcast channel (PSBCH) sent by the terminal within the network coverage, to perform sidelink communication.

As illustrated in FIG. 1-3, for the sidelink communication outside the network coverage, all terminals performing sidelink communication (such as terminals 1 and 2 in FIG. 1-3) are outside the network coverage, and all terminals are configured to determine sidelink configuration based on the pre-configuration information, to perform sidelink communication.

As illustrated in FIG. 1-4, for the sidelink communication with the central control node, multiple terminals constitute a communication group, and the communication group has a central control node (such as a terminal 1 in FIG. 1-4), which may also be referred to as a cluster header (CH). The central control node has one of the following functions: responsible for establishing a communication group; managing the joining and leaving of group members; conducting resource coordination to allocate sidelink transmission resources for other terminals (such as a terminal 2 and a terminal 3 in FIG. 1-4); receiving sidelink feedback information from other terminals; or conducting resource coordination with other communication groups.

The terminal in the sidelink system may be any terminal including, but not limited to, a terminal connected to a network device and/or other terminals via wired or wireless connections. For example, the terminal may refer to an access terminal, user equipment (UE), a subscriber unit, a subscriber station, a mobile terminal, a mobile station, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA) device, a handheld device with wireless communication capabilities, a computing device or other processing device connected to a wireless modem, an in-vehicle device, a wearable device, a terminal device in a 5G network, or a terminal device in a future evolved network.

### Resource selection mode in sidelink communication

The device to device communication is a sidelink transmission technology based on device to device (D2D). Different from the traditional cellular system in which communication data is received or sent through base stations, the D2D communication has higher spectrum efficiency and lower transmission time-delay. In sidelink communication, a terminal to terminal direct communication approach is adopted. The 3GPP has defined two transmission modes: first mode and second mode.

In the first mode, the transmission resources of the terminal are allocated by the base station. Based on the resources allocated by the base station, the terminal sends data on the sidelink. The base station may allocate either single transmission resources or semi-static transmission resources for the terminal. As illustrated in FIG. 1-1, the terminals are within the coverage of the network, and the network allocates transmission resources for the sidelink transmission for the terminals.

In the second mode, the terminal selects a resource in the resource pool for data transmission. As illustrated in FIG. 1-3, the terminals are outside the coverage of the cell, and the terminals autonomously select transmission resources from the preconfigured resource pool for sidelink transmissions. Alternatively, as illustrated in FIG. 1-1, the terminals autonomously select transmission resources from the network configured resource pool for sidelink transmissions.

It should be noted that in the embodiments of the disclosure, the first mode may also be referred to as a first resource selection mode or mode 1, and the second mode may also be referred to as a second resource selection mode or mode 2. The names of the first mode and the second mode are not limited in the technical solutions in the embodiments of the disclosure.

### Transmission modes in NR-V2X

In NR-V2X, since autonomous driving needs to be supported, higher requirements are put forward for data interaction between vehicles, such as higher throughput, lower time-delay, higher reliability, larger coverage, more flexible resource allocation, etc.

In LTE-V2X, broadcast transmission mode is supported, while in NR-V2X, unicast and multicast transmission modes are introduced. For the unicast transmission, there is only one terminal at its receiving end. As illustrated in FIG. 2-1, unicast transmission is performed between terminal 1 and terminal 2. For the multicast transmission, its receiving end consists of all terminals in a communication group or all terminals within a certain transmission distance. As illustrated in FIG. 2-2, terminal 1, terminal 2, terminal 3 and terminal 4 constitute a communication group, in which the terminal 1 sends data, and other terminals in the group are all receiving ends. For the broadcast transmission mode, the receiving end is any terminal around the sending end. As illustrated in FIG. 2-3, the terminal 1 is the sending end, and the other terminals around it, terminals 2 to 6, are all receiving ends.

### Two-stage SCI mechanism in NR-V2X

In NR-V2X, 2-stage sidelink control information (SCI) is introduced. The first-stage SCI is carried in a physical sidelink control channel (PSCCH), and is used to indicate information such as transmission resources of a physical sidelink shared channel (PSSCH), reserved resource information, a modulation and coding scheme (MCS) level, a priority. The second-stage SCI is sent within the resources of the PSSCH and demodulated using demodulation reference signal (DMRS) of the PSSCH, and is used to indicate information for data demodulation, such as a sending end ID, a receiving end ID, a hybrid automatic repeat reQuest (HARQ) ID, a new data indicator (NDI), and the like.

### NR-V2X system frame structure

Exemplary, the slot structure in NR-V2X is illustrated in FIG. 3-1 and FIG. 3-2. One slot includes 14 sidelink symbols. Each rectangular box in FIG. 3-1 and FIG. 3-2 represents a sidelink symbol, and the sidelink symbol may be an orthogonal frequency division multiplexing (OFDM) symbol (which may also be briefly referred to as a symbol).

FIG. 3-1 shows a slot structure that does not include a physical sidelink feedback channel (PSFCH) in the slot. FIG. 3-2 shows a slot structure that includes a PSFCH in the slot. In FIG. 3-1 and FIG. 3-2, the PSCCH occupies 2 or 3 symbols starting from the second sidelink symbol in the slot in time domain, and the PSCCH may occupy {10, 12, 15, 20, 25} physical resource blocks (PRB) in frequency domain. In order to reduce the complexity of blind detection of PSCCH by the terminal, only one number of PSCCH symbols and one number of PRBs are allowed to be configured in one resource pool. In addition, since the sub-channel is the minimum granularity of PSSCH resource allocation in NR-V2X, the number of PRBs occupied by the PSCCH must be less than or equal to the number of PRBs included in one sub-channel in the resource pool, so as to avoid additional restrictions on the PSSCH resource selection or allocation. The PSSCH also starts from the second sidelink symbol in the slot in time domain. The last sidelink symbol in the slot is a guard period (GP) symbol, and the remaining symbols are mapped to the PSSCH. The first sidelink symbol in the slot is a repetition of the second sidelink symbol. Usually, the receiving end uses the first sidelink symbol as an automatic gain control (AGC) symbol, and the data on the first sidelink symbol is usually not used for data demodulation. The PSSCH occupies K (K ≥ 1) sub-channels in frequency domain, each of which includes N (N ≥ 1) consecutive PRBs. In FIG. 3-2, the slot includes a PSFCH. The second-to-last symbol and the third-to-last symbol in the slot are used for PSFCH transmission, and the symbol preceding the PSFCH is used as the GP symbol.

### Sidelink synchronization

### 1) Sidelink synchronization signal block (SSB)

In the sidelink system, the terminal may use the base station or the global navigation satellite system (GNSS) as the original reference synchronization source. In addition, to ensure normal operation of sidelink communication under various coverage environments, the sidelink system supports the use of terminal as the reference synchronization source. When a terminal is used as the reference synchronization source, the terminal needs to send a sidelink synchronization signal (SLSS) and a physical sidelink broadcast channel (PSBCH), to provide synchronization information and necessary sidelink configuration information for other terminals. In the sidelink system, the SLSS and the PSBCH are sent in the same slot, which is called S-SSB slot. The SLSS is further divided into a sidelink primary synchronization signal (S-PSS) and a sidelink secondary synchronization signal (S-SSS). The structure of the S-SSB slot is illustrated in FIG. 4. It should be noted that, each rectangular box in Fig. 4 represents a symbol, the S-PSS occupies 2 symbols, the S-SSS occupies 2 symbols, the last symbol in the slot is used as the GP symbol, and the remaining symbols are used for PSBCH transmission.

### 2) Synchronize resources

When the terminal has obtained synchronization information from the synchronization source, it needs to send the sidelink synchronization signal and the PSBCH (i.e. S-SSB) via the sidelink in order to assist other terminals in obtaining synchronization information. The resources for transmission of the sidelink synchronization signal and the PSBCH are referred to as sidelink synchronization resources (synchronization resources for short).

Due to the limitation of half-duplex, the terminal cannot simultaneously send and receive signals on the same carrier. To prevent the terminal from being unable to receive sidelink data from other terminals when sending the sidelink synchronizing signals, which results in the loss of sidelink data, in sidelink transmission, synchronization resources and sidelink data transmission resources are time-division multiplexed (TDM). That is to say, the multiplexing of the S-SSBs and the sidelink data via frequency-division multiplexing (FDM) is not supported. Specifically, when determining the resource pool for sidelink data transmission, slots where synchronization resources are located are excluded. That is to say, the slots where the synchronization resources are located will not be included in the resource pool. The slots where the synchronization resources are located are also known as the S-SSB slots.

The period of synchronization resources (which may also be referred to as a synchronization period) in the NR-V2X system is 160 ms. The number of slots included within one synchronization period is 160 * 2 ^ µ, where µ = 0, 1, 2, and 3 correspond to subcarrier spacing of 15 kHz, 30 kHz, 60 kHz, and 120 kHz, respectively. Also due to the limitation of half-duplex, the terminal needs to send and receive sidelink synchronization signals on different time domain resources. Therefore, at least two sets of synchronization resources are configured within each synchronization period to be respectively used for sending or receiving the S-SSBs. When a certain carrier takes GNSS as the highest priority, to avoid mutual interference between the S-SSBs sent by the terminal in the cell and the S-SSBs sent by the terminal outside the cell, a set of synchronization resources, that is, a third set of synchronization resources, may be additionally configured on the carrier. When a terminal that is located outside the network coverage and directly synchronized to GNSS sends the S-SSBs, the third set of synchronization resources will be used.

Beam-based sidelink transmission is not supported in R16 NR-V2X. However, to improve the detection performance of the S-SSBs, each set of synchronization resources includes multiple transmission opportunities, which are used for transmitting the S-SSBs. In subsequent versions, if the beam-based sidelink transmission is introduced, the terminal may send the S-SSBs using different beams in the multiple transmission opportunities.

Exemplary, FIG. 5 shows a schematic diagram of NR-V2X synchronization resources. The synchronization period is 160 ms. Two sets of synchronization resources are configured within each synchronization period, which are recorded as the first set of synchronization resources and the second set of synchronization resources. Four synchronous slots (i.e. 4 S-SSB slots or 4 transmission opportunities) are configured in each set of synchronous resources. The sending end may send the S-SSBs respectively on the four synchronous slots. When the receiving end detects a sidelink synchronization signal on a certain synchronization slot, the receiving end may determine whether the synchronization slot belongs to the first set of synchronization resources or the second set of synchronization resources based on the direct frame number (DFN) and the slot number carried in the PSBCH transmitted simultaneously with the sidelink synchronization signal, and then the receiving end selects four synchronization slots of another set of synchronization resources to send the S-SSBs.

For any set of synchronization resources within the synchronization period, all synchronization slots (that is, the slots where the synchronization resources are located) included in a set of synchronization resources may be determined by configuring the following three parameters.

Parameter 1: the number of synchronization slots within a period (sl-NumSSB-WithinPeriod). This parameter is used to indicate the number of synchronization slots included in a set of synchronization resources within a synchronization period. Specifically, for different subcarrier spacings in FR1 and FR2, the number of synchronization slots supported in each set of synchronization resources may be referred to Table 1 below.

**Table 1**

| | FR1 | FR2 |
|---|---|---|
| 15 kHz SCS | {1} | |
| 30 kHz SCS | {1, 2} | |
| 60 kHz SCS | {1, 2, 4} | {1, 2, 4, 8, 16, 32} |
| 120 kHz SCS | | {1, 2, 4, 8, 16, 32, 64} |

Parameter 2: synchronization slot offset (sl-TimeOffsetSSB). This parameter is used to indicate the slot offset of the first synchronization resource in each set of synchronization resources within a synchronization period relative to the synchronization period boundary.

Parameter 3: time interval (sl-TimeInterval). This parameter is used to indicate the slot interval between two neighbor synchronization resources in each set of synchronization resources within a synchronization period.

The above three parameters may be configured by the network device, or agreed upon by protocols, or predefined.

Exemplary, FIG. 6 shows a set of synchronization resources within a synchronization period. The synchronization period is 160 ms. When the subcarrier spacing is 60 KHz, a synchronization period includes 640 slots. A set of synchronization resources is configured to include four synchronization slots, that is, sl-NumSSB-WithinPeriod = 4. The offset of the first synchronization resource in a set of synchronization resources relative to the period boundary is configured to be 15 slots, that is, sl-TimeOffsetSSB = 15; and the slot interval between two neighbor synchronization resources in a set of synchronization resources is configured to be 10 slots, that is, sl-TimeInterval = 10. Therefore, it may be determined that the slots where the four synchronization resources are located are the slot 15, the slot 25, the slot 35, and the slot 45, respectively.

### Reduced capability terminal

Reduced capability (RedCap) is a 5G technology defined by the 3GPP. Compared with 4G, 5G exhibits significant advantages in terms of communication rate, time-delay and reliability, but this has also led to an increase in terminal design complexity and cost. The high terminal cost renders it unacceptable for many practical commercial deployment scenarios. In these scenarios, terminals have relatively low requirements for communication performance and do not need to support the most powerful 5G functions, but they have stringent demands for cost and power consumption. Therefore, to achieve a balance between performance and cost, and to better meet the demands of the Industrial Internet and the Internet of Things for cost reduction and power consumption reduction, a reduced capability terminal type is defined in the 3GPP Rel-17 version. The reduced capability terminal may reduce the cost and power consumption of terminal through techniques such as reducing bandwidth, decreasing the number of antennas, and lowering the modulation order.

The 3GPP Rel-18 SL project is advancing the standardization work for deploying sidelink technology in unlicensed spectrum, namely the SL-U technology. The SL-U technology may be deployed in commercial scenarios such as wearable smart devices, smart homes, and Industrial Internet, etc. During the discussions on the Rel-18 SL-U project, all terminals are assumed to possess the same capabilities, without considering the reduced capability terminals. However, the cost and power consumption of terminal are critical metrics for commercial deployment. The low cost and reduced power consumption introduced by reduced capability terminals can provide a convenient pathway for the commercialization of SL-U technology. Therefore, standardizing the SL-U RedCap technology could be considered in Rel-19 SL.

After a reduced capability terminal is introduced into the sidelink system, the reduced capability terminal needs to notify other terminals in the sidelink system that it is a reduced capability terminal. Therefore, it is necessary to clarify how the reduced capability terminal in the sidelink system notifies others of its reduced capability type. Therefore, the following technical solutions in the embodiments of the disclosure are provided.

It should be understood that the terms "system" and "network" are generally used interchangeably herein. In this disclosure, the term "and/or" merely indicates an association relationship for describing associated objects, and represents that there are three kinds of relationships. For example, "A and/or B" may represent three situations, i.e., independent existence of A, existence of both A and B, and independent existence of B. In addition, in this disclosure, the character "/" generally indicates that the anterior and posterior associated objects are in a kind of "or" relationship. It is also to be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B. It is also to be understood that "correspond/correspondence" mentioned in the embodiments of the disclosure may represent that there is a direct or indirect correspondence between the two objects; or, may represent that there is an association relationship between two objects; or, may be a relationship such as indicating and being indicated, configuring and being configured, etc. It is also to be understood that "predefined/predefinition" or "predefined rule" mentioned in the embodiments of the disclosure may be implemented by storing corresponding codes, tables, or other means which may be used to indicate relevant information in advance within a device (including, for example, a terminal device and a network device), the specific implementation thereof are not be limited in the disclosure. For example, "predefined" may be "defined in a protocol". It is also to be understood that in the embodiments of the disclosure, the "protocol" may be a standard protocol in the field of communication.

For convenience of understanding of technical solutions in the embodiments of the disclosure, the technical solutions in the disclosure are described in detail by way of specific embodiments hereinafter. The above related technologies, as alternatives, may be arbitrarily combined with the technical solutions in the embodiments of the disclosure, all of which belong to the scope of protection of the embodiments of the disclosure. The embodiments of the disclosure include at least some of the following contents.

After a reduced capability terminal is introduced into the sidelink system, to ensure normal communication between terminals with varying capabilities, the reduced capability terminal needs to notify other terminals in advance that it is a reduced capability terminal before performing data service communication with other terminals. This allows other terminals to identify the presence of the reduced capability terminal in the sidelink system, thereby ensuring the successful establishment of communication links between terminals with different capabilities.

FIG. 7 is a schematic flowchart of a method for determining terminal type according to an embodiment of the disclosure. As illustrated in FIG. 7, the method includes one or more of the following operations.

In operation 701, a first terminal sends a first signal on a first time unit. The first time unit is used for a reduced capability terminal to send the first signal, and the first terminal is a terminal in a sidelink system.

In operation 702, a second terminal receives a first signal on a first time unit. The first time unit is used for a reduced capability terminal to send the first signal, and the second terminal is a terminal in a sidelink system.

In the embodiments of the disclosure, the first terminal and the second terminal are terminals in the sidelink system. In some implementations, the sidelink system may be an SL-U system. The first terminal is a reduced capability terminal. The types of the second terminal and the first terminal may be different or the same. That is to say, the second terminal may be a traditional terminal (e.g., a non-reduced capability terminal) or a reduced capability terminal.

A reduced capability terminal may use an "explicit notification method". The "explicit notification method" is that the terminal sends a newly defined information (hereinafter referred to as first information), which contains the related information about the reduced capability terminal.

In an embodiment of the disclosure, a reduced capability terminal uses an "implicit notification method" when notifying its own terminal type to other terminals. The receiving end ascertains that the sending end is a reduced capability terminal by receiving and decoding the information. The "implicit notification method" is that the terminal sends a special signal (hereinafter referred to as a first signal) on a special time unit (hereinafter referred to as a first time unit); and if the receiving end receives the special signal on the special time unit, the receiving end ascertains that the sending end is a reduced capability terminal.

Hereinafter, the explicit notification method (corresponding to the first scheme hereinafter) and the implicit notification method (corresponding to the second scheme hereinafter) will be described respectively.

### The First Scheme not covered by the claimed invention

A first terminal sends first information. The first information indicates that the first terminal is a reduced capability terminal. A second terminal receives the first information, and determines that the first terminal is a reduced capability terminal based on the first information.

In some implementations, the first terminal sends the first information to the second terminal in a unicast manner. In other implementations, the first terminal sends the first information in a broadcast manner. In yet another implementation, the first terminal sends the first information in a multicast manner.

In some implementations, the first information may also be referred to as first identification information or reduced capability identification information. That is to say, the first information, the first identification information, and the reduced capability identification information may be substituted for each other.

The first information includes related information of a reduced capability terminal (or reduced capability), and indicates that the terminal type of the sending end (i.e., the first terminal) of the first information is a reduced capability terminal.

In some implementations, the first information includes at least one of: first indication information, or first terminal capability information.

The first indication information indicates that the first terminal is the reduced capability terminal, or indicates whether the first terminal is the reduced capability terminal.

The first terminal capability information includes one or more pieces of capability information of the first terminal.

Exemplary, the first indication information is represented by 1 bit, and when the bit value is set to "1", it represents that the terminal is a reduced capability terminal. If the sending end is a reduced capability terminal, the bit value is set to "1" when sending the first indication information. If the receiving end receives the first indication information having the bit value of "1", the receiving end determines that the sending end is a reduced capability terminal. Herein, the sending end is the first terminal mentioned above, and the receiving end is the second terminal mentioned above. In addition, if the sending end is not a reduced capability terminal, it is not necessary to send the first indication information.

In the above example, the bit value of "1" represents that the terminal is a reduced capability terminal, but the disclosure is not limited thereto. The bit value of "0" may also represent that the terminal is a reduced capability terminal.

Exemplary, the first indication information is represented by 1 bit. When the bit value is set to "1", it represents that the terminal is a reduced capability terminal. When the bit value is set to "0", it represents that the terminal is not a reduced capability terminal (or the terminal is a traditional terminal). If the sending end is a reduced capability terminal, the bit value is set to "1" when sending the first indication information. If the receiving end receives the first indication information having the bit value of "1", the receiving end determines that the sending end is a reduced capability terminal. Herein, the sending end is the first terminal mentioned above, and the receiving end is the second terminal mentioned above. Furthermore, if the sending end is not a reduced capability terminal, the bit value is set to "0" when sending the first indication information. If the receiving end receives the first indication information having the bit value of "0", the receiving end determines that the sending end is not a reduced capability terminal (or that the sending end is a traditional terminal).

In the above example, the bit value of "1" represents that the terminal is a reduced capability terminal, and the bit value of "0" represents that the terminal is not a reduced capability terminal, but the disclosure is not limited thereto. The bit value of "0" may also represent that the terminal is a reduced capability terminal, and the bit value of "1" may also represent that the terminal is not a reduced capability terminal.

The first terminal capability information includes one or more pieces of capability information of the first terminal. The one or more pieces of capability information of the first terminal determine that the type of the first terminal is a reduced capability terminal or determines whether the type of the first terminal is a reduced capability terminal.

In some implementations, the first terminal capability information (that is, the one or more pieces of capability information of the first terminal) includes at least one of: a modulation order supported by the first terminal; a maximum modulation order supported by the first terminal; a bandwidth supported by the first terminal; a maximum bandwidth supported by the first terminal; a number of antennas supported by the first terminal; or a number of multiple-input multiple-output (MIMO) streams supported by the first terminal.

The terminals with different capabilities support different capabilities. For example, the terminals with different capabilities support at least one of the following different capabilities: modulation orders, maximum modulation orders, bandwidths, maximum bandwidths, numbers of antennas, or numbers of MIMO streams. Therefore, it is possible to determine whether the terminal is a reduced capability terminal based on the capability supported by the terminal.

Exemplary, the capability supported by a reduced capability terminal includes at least one of: modulation order up to 64 QAM, maximum bandwidth of 20 MHz, the number of antennas of 1, or the number of MIMO streams of 1.

After the receiving end receives the one or more pieces of capability information of the first terminal, the receiving end may determine whether the first terminal is a reduced capability terminal based on at least one of: the modulation order supported by the first terminal, the maximum modulation order supported by the first terminal, the bandwidth supported by the first terminal, the maximum bandwidth supported by the first terminal, the number of antennas supported by the first terminal, or the number of MIMO streams supported by the first terminal.

As an implementation, the first information may include only the first terminal capability information, and does not include the first indication information. After receiving the first information, the receiving terminal may acquire the first terminal capability information of the sending end, and may determine whether the sending end is a reduced capability terminal based on the first terminal capability information.

As an implementation, the first information may include only the first indication information, and does not include the first terminal capability information. After receiving the first information, the receiving terminal may acquire the first indication information, and may determine whether the sending end is a reduced capability terminal based on the first indication information.

As an implementation, the first information may include both the first indication information and the first terminal capability information. After receiving the first information, the receiving end may acquire the first indication information and the first terminal capability information. The receiving end may determine whether the sending end is a reduced capability terminal based on the first indication information, and the receiving end may, based on the first terminal capability information, determine the capability supported by the sending end and then determine whether the sending end is a reduced capability terminal.

Hereinafter, the transmission methods of the first information will be described.

### The First Method

The first information is carried in first signaling, and the first signaling includes one or more of the following signaling: SCI, or a media access control control unit (MAC CE).

In some implementations, all of the first information is carried in an MAC CE.

Exemplary, the first information includes first indication information and/or first terminal capability information, and all of the first information is carried in the MAC CE. Herein, for the relevant understanding of the first indication information and the first terminal capability information, reference can be made to the aforementioned related description.

In some implementations, a portion of the first information is carried in an SCI, and another portion of the first information is carried in an MAC CE.

Exemplary, the first information includes first indication information and first terminal capability information. The first indication information in the first information is carried in the SCI, while the first terminal capability information in the first information is carried in the MAC CE. Herein, for the relevant understanding of the first indication information and the first terminal capability information, reference can be made to the aforementioned related description.

In some implementations, all of the first information is carried in an SCI.

Exemplary, the first information includes first indication information, and all of the first information is carried in the SCI. Herein, for the relevant understanding of the first indication information, reference can be made to the aforementioned related descriptions.

It is to be noted that, since the overhead of the first indication information is relative small, the overhead of the first terminal capability information is relative large, the capacity of the SCI is relative small, and the capacity of the MAC CE is relative large, and thus, the first indication information may be carried in the SCI, and the first terminal capability information may be carried in the MAC CE.

In some implementations, the MAC CE has a corresponding priority that is determined based on at least one of: protocol predefined information, preconfigured information, or network configured information. Exemplary, the priority corresponding to the MAC CE is the highest priority. The priority corresponding to the MAC CE determines the priority sending order and/or the priority processing order of the MAC CE.

In some implementations, the first signaling is carried in a first physical sidelink channel, and the first physical sidelink channel includes a PSCCH and/or a PSSCH; and/or the first signaling is transmitted in a first slot.

Herein, the slot where the first physical sidelink channel is located is the first slot. Based on such understanding, the fact that the first signaling is carried in the first physical sidelink channel may be understood that the first signaling is transmitted in the first slot.

In some implementations, the first physical sidelink channel carries only the first signaling; and/or the first slot transmits only the first signaling.

In other implementations, the first physical sidelink channel carries not only the first signaling, but also the unicast link related information; and/or the first slot transmits not only the first signaling, but also the unicast link related information. That is to say, the first signaling and the unicast link related information are carried in the same physical sidelink channel; and/or the first signaling and the unicast link related information are transmitted in the same slot.

In some implementations, the unicast link related information is direct communication request (DCR) information. In other implementations, the unicast link related information is direct communication accept (DCA) information.

Hereinafter, a transmission method of the first information will be described in combination with specific application scenarios.

In the process of establishing the SL PC5 unicast link between terminals, two terminals in the unicast link need to transmit information related to the establishment of the unicast link, that is, DCR information and DCA information. For example, a UE A sends DCR information in a unicast or broadcast manner, thereby initiating a unicast establishment request. If the UE B needs to establish a unicast link with the UE A, the UE B needs to respond to the DCR information, and subsequently sends DCA information to the UE A. It is to be noted that, the DCR information and the DCA information are high-layer descriptions. From the perspective of the physical layer, the DCR information and the DCA information are both carried in PSCCH/PSSCH transmission.

The reduced capability terminal sends first information in the process of establishing the unicast link, and the first information and information related to establishing the unicast link (DCR information or DCA information) are transmitted simultaneously. That is to say, the first information and the information related to establishing the unicast link are transmitted in one slot. In other words, the first information and the information related to establishing the unicast link are carried in the same PSCCH/PSSCH. As an implementation, all of the first information may be carried in the same signaling. For example, all of the first information is carried in the MAC CE. The MAC CE has a corresponding priority that is determined based on protocol predefined information, preconfigured information, or network configured information. Exemplary, the priority is taken as the highest priority. As another implementation, a portion of the first information may be carried in one signaling, and another portion of the first information may be carried in another signaling. For example, the first indication information in the first information is carried in the SCI, while the first terminal capability information in the first information is carried in the MAC CE. The MAC CE has a corresponding priority that is determined based on protocol predefined information, preconfigured information, or network configured information. Exemplary, the priority is taken as the highest priority.

As one case, in the process of establishing the unicast link, the reduced capability terminal is the source terminal that initiates the establishment of the unicast link. For example, a UE A is a reduced capability terminal, and at this time, the UE A is a source terminal that establishes a unicast link, and a UE B is a target terminal. The UE A sends the first information at the same time as sending the DCR information in a unicast or broadcast manner. After receiving the first information, the UE B may determine that the UE A is a reduced capability terminal.

As another case, in the process of establishing the unicast link, the reduced capability terminal is the target terminal that responds to other terminals. For example, a UE A is a source terminal that establishes a unicast link, a UE B is a target terminal, and the UE B is a reduced capability terminal. Firstly, the UE A sends the DCR information in a unicast or broadcast manner, and if the UE B needs to establish a unicast link with the UE A after receiving the DCR information, the UE B sends the first information at the same time as sending the DCA information. The UE A, after receiving the first information, may determine that the UE B is a reduced capability terminal.

### The Second Method

The first information is carried in PCS-RRC signaling.

Herein, the first information sent by the reduced capability terminal is carried in the PC5-RRC signaling. It is to be noted that, the PC5-RRC signaling only exists on the unicast link. Therefore, when the reduced capability terminal sends the first information, the reduced capability terminal has successfully established the unicast link with other terminals. That is to say, the first information is sent to a terminal that has established a unicast link with the reduced capability terminal.

In some implementations, the physical resources for transmitting the first information are scheduled by the network. That is to say, the resource selection method of sidelink communication is the first mode. In other implementations, the physical resources for transmitting the first information are selected by the first terminal. That is to say, the resource selection method of sidelink communication is the second mode. Herein, for the relevant understanding of the first mode and the second mode, reference can be made to the aforementioned related solutions.

It is to be noted that, due to the terminal capabilities supported by different terminals may be different, the unicast link establishment process may be performed in the frequency domain resource set configured by default. Exemplary, the frequency domain resource set may be the sidelink resource pool or the sidelink BWP. As an implementation, the frequency domain resource set is configured by the network device or preconfigured.

### The Second Scheme

A first terminal sends a first signal on a first time unit. The first time unit is used for a reduced capability terminal to send the first signal. If the second terminal receives the first signal from the first terminal on the first time unit, the second terminal determines that the first terminal is a reduced capability terminal.

In some implementations, the first time unit is additionally configured sidelink synchronization resources (simply referred to as synchronization resources), and it is necessary to ensure that the additionally configured synchronization slots cannot overlap with the synchronization resources conventionally used for sidelink synchronization. It is to be noted that, when additional synchronization resources are configured, only when the terminal is a reduced capability terminal, the first signal will be sent on the additional synchronization resources.

In some implementations, the first signal is an S-SSB.

In some implementations, the first signal is not used in the synchronization process.

In some implementations, the first time unit comprises one or more first time domain resources, and the first time domain resources are used to transmit the first signal.

Herein, since the first time domain resources are used to transmit the first signal, the first time domain resources may also be understood as a transmission opportunity of the first signal. As an implementation, the first time domain resources may be slots or slot resources that are used to transmit the first signal.

In some implementations, the configuration information of the first time unit is determined based on at least one of preconfigured information or network configured information.

In some implementations, the first time unit is contained in a sidelink resource pool.

Hereinafter, configuration methods of the first time unit will be described.

### Method A

Based on one or more sets of synchronization resources configured in the synchronization period, one or more first time domain resources (e.g., one or more slots) are added to each set of synchronization resources for transmission of the first signal. The first time unit includes the one or more first time domain resources.

In some implementations, the first time unit has configuration information including at least one of: first information, second information or third information.

The first information is for determining a length of a period.

The second information is for determining one or more sets of resources within a period.

The third information is for determining resources belonging to the first time unit in at least one set of resources within a period.

Exemplary, the first information indicates that the length of the period (which may be referred to as the synchronous period) is 160 ms.

Exemplary, the second information is for configuring one or more sets of resources within each period. The second information may include the following parameters 1, 2 and 3.

Parameter 1: a number of synchronization slots within a period (sl-NumSSB-WithinPeriod). This parameter is for indicating the number of resources included in a set of resources within a period.

Parameter 2: a synchronization slot offset (sl-TimeOffsetSSB). This parameter is for indicating the slot offset of the first resource in each set of resources within a period relative to the synchronization period boundary.

Parameter 3: a time interval (sl-TimeInterval). This parameter is for indicating the slot interval between two adjacent resources in each set of resources within a period.

Exemplary, the third information is for configuring resources belonging to the first time unit in at least one set of resources within a period.

It is to be noted that, the above resources may be referred to as synchronization resources, and the synchronization resources are for sending the S-SSBs. In the synchronization resources, some resources belong to the first time unit, and the S-SSBs sent on these resources are not for synchronization, while the S-SSBs sent on other resources are for synchronization.

In some implementations, the third information includes at least one of: a first parameter, a second parameter or a third parameter.

The first parameter is for indicating a number of first time domain resources contained in each of the at least one set of resources.

The second parameter is for indicating an index of an initial first time domain resource contained in each of the at least one set of resources.

The third parameter is for indicating a time interval between two adjacent first time domain resources within each of the at least one set of resources.

Herein, the first time domain resources belong to the first time unit.

Exemplary, the first parameter is for indicating that each set of resources contains X first time domain resources.

Exemplary, the second parameter is for indicating that an index of an initial first time domain resource contained in each set of resources is #Y.

Exemplary, the third parameter is for indicating that a time interval between two adjacent first time domain resources within each set of resources is T1.

As an implementation, the third information includes only the first parameter, and then, the last X resources within each set of resources belong to the first time domain resources by default, and X is indicated by the first parameter. Moreover, the time interval between two adjacent first time domain resources may be indicated by the parameter 3 in the second information.

As an implementation, the third information includes only the second parameter, and then, starting from the resource with the index of #Y within each set of resources, all subsequent resources belong to the first time domain resource, and #Y is indicated by the second parameter. Moreover, the time interval between two adjacent first time domain resources may be indicated by the parameter 3 in the second information.

As an implementation, the third information includes the first parameter and the third parameter, and then, the last X resources within each set of resources belong to the first time domain resources by default, X is indicated by the first parameter, and the time interval between the two adjacent first time domain resources may be indicated by the third parameter.

As an implementation, the third information includes the second parameter and the third parameter, and then, starting from the resource with the index of #Y within each set of resources, all subsequent resources belong to the first time domain resource, #Y is indicated by the second parameter, and the time interval between the two adjacent first time domain resources may be indicated by the third parameter.

As an implementation, the third information includes the first parameter and the second parameter, and then, starting from the resource with the index of #Y within each set of resources, the subsequent X resources belong to the first time domain resource, X is indicated by the first parameter, and #Y is indicated by the second parameter. Moreover, the time interval between two adjacent first time domain resources may be indicated by the parameter 3.

As an implementation, the third information includes the first parameter, the second parameter and the third parameter, and then, starting from the resource with the index of #Y within each set of resources, the subsequent X resources belong to the first time domain resource, X is indicated by the first parameter, #Y is indicated by the second parameter, and the time interval between the two adjacent first time domain resources may be indicated by the third parameter.

In some implementations, the first time unit appears in every period.

In other implementations, the first time unit does not appear in every period, i.e. there is a period interval between two adjacent periods containing the first time unit. For this case, the configuration information of the first time unit further includes fifth information, and the fifth information is for determining a period interval between two adjacent periods containing the first time unit.

Hereinafter, the configuration of the first time unit will be described with reference to specific examples.

Additional X slots (i.e., X first time domain resources) are configured in each set of synchronization resources within a period, the X slots belong to the first time unit, and X is a positive integer greater than or equal to 1. As illustrated in FIG. 8, two sets of resources are configured in one synchronization period (160 ms), the subcarrier spacing is 30 KHz, and each set of resources contains two resources for synchronization. An additional resource is added to each set of synchronization resources for the reduced capability terminal to send the first signal, that is, X = 1. That is to say, a set of resources includes three resources, and the slot indexes of the three resources are # 0, # 1, and # 2, respectively. The resource with the slot index of #2 is used for the reduced capability terminal to send the first signal.

In some implementations, the first time unit appears in every synchronization period. In other implementations, the first time unit will not appear in every synchronization period. The resources of the first time unit may be configured at intervals of N synchronization periods, and N is a positive integer greater than or equal to 1. N depends on preconfigured information or network configured information. As illustrated in FIG. 9, the resources of the first time unit may be configured at intervals of one synchronization period, and the resources of the first time unit are configured within the first 160 ms synchronous period and the third 160 ms synchronous period.

### Method B

An additional set of resources is configured in the synchronous period for transmitting the first signal, and the additional set of resources includes one or more first time domain resources.

In some implementations, the first time unit has configuration information including at least one of: first information, or fourth information.

The first information is for determining a length of a period.

The fourth information is for determining a set of resources within a period, and resources in the set of resources belong to the first time unit.

Exemplary, the first information indicates that the length of the period (which may be referred to as the synchronous period) is 160 ms.

In some implementations, the fourth information includes at least one of: a fourth parameter, a fifth parameter or a sixth parameter.

The fourth parameter is for indicating a number of first time domain resources contained in the set of resources.

The fifth parameter is for indicating a time offset of an initial first time domain resource in the set of resources relative to boundary of the period.

The sixth parameter is for indicating a time interval between two adjacent first time domain resources in the set of resources.

Exemplary, the fourth parameter may be represented as the number of synchronization slots within a period (sl-NumSSB-WithinPeriod).

Exemplary, the fifth parameter may be represented as the synchronous slot offset (sl-TimeOffsetSSB).

Exemplary, the sixth parameter may be represented as the time interval (sl-TimeInterval).

In some implementations, the time offset and/or the time interval are/is in units of slots.

It is to be noted that, the first time domain resource cannot be located in the same slot as the time domain resources for synchronization.

As an implementation, if only one first time domain resource is contained in the first time unit, only the fifth parameter is required to determine the time domain position of the first time domain resource. That is to say, the fourth information may include only the fifth parameter.

In some implementations, the first time unit appears in every period.

In other implementations, the first time unit does not appear in every period, i.e. there is a period interval between two adjacent periods containing the first time unit. For this case, the configuration information of the first time unit further includes fifth information, and the fifth information is for determining a period interval between two adjacent periods containing the first time unit.

Hereinafter, the configuration of the first time unit will be described with reference to specific examples.

Within one synchronous period, the first time unit is configured to transmit the first signal. The first time unit contains one or more slots (i.e., one or more first time domain resources). A first slot position in the first time unit is determined based on a first offset (i.e., information indicated by the fifth parameter). The subsequent slot positions in the first time unit are determined based on the first offset (i.e., the information indicated by the fifth parameter) and a first time interval (i.e., information indicated by the sixth parameter). Exemplary, the first time unit includes three slots. If the first offset is 20, the position of the first slot in the first time unit is the 20th slot within a synchronous period. If the first time interval is 5, the second slot position and the third slot position are the 25th slot and the 30th slot within the synchronous period, respectively. As illustrated in FIG. 10, two sets of resources are configured in a synchronous period (160 ms), namely, the first set of synchronization resources and the second set of synchronization resources. Each set of synchronization resources contains two resources, and the subcarrier spacing is 30 KHz. On this basis, additional set of resources (that is, a first time unit) is configured. The first time unit includes two resources, and the time domain positions of the two resources may be determined based on the first offset (i.e., the information indicated by the fifth parameter) and the first time interval (i.e., the information indicated by the sixth parameter).

In some implementations, the first time unit appears in every synchronization period. In other implementations, the first time unit will not appear in every synchronization period. The resources of the first time unit may be configured at intervals of N synchronization periods, and N is a positive integer greater than or equal to 1. N depends on preconfigured information or network configured information. As illustrated in FIG. 11, the resources of the first time unit may be configured at intervals of one synchronization period, and the resources of the first time unit is configured in the first 160 ms synchronous period and the third 160 ms synchronous period.

With the technical solution of the embodiments of the disclosure, the reduced capability terminal may explicitly indicate that the terminal is a reduced capability terminal by sending first information, or the reduced capability terminal may implicitly notify the receiving end that there is a reduced capability terminal by sending a special signal on a special time unit. In this way, it can assist terminals with different capabilities to successfully establish communication links, thereby ensuring that the reduced capability terminal can operate normally in the sidelink system.

The preferred implementations of the disclosure have been described in detail as above with reference to the accompanying drawings.

It should further be understood that, in various method embodiments of the disclosure, the values of the sequence numbers of the aforementioned processes do not imply the sequence of execution. The sequence of execution of the processes should be determined based on functions and inherent logics thereof, and the values of the sequence numbers should not constitute any limitation on the implementation processes of the embodiments of the disclosure. Furthermore, in the embodiments of the disclosure, the terms "downlink", "uplink" and "sidelink" are used to represent a transmission direction of a signal or data. Herein, the "downlink" is used to represent that the transmission direction of the signal or data is a first direction sent from a station to a user equipment of a cell; the "uplink" is used to represent that the transmission direction of the signal or data is a second direction sent from the user equipment of the cell to the station; and the "sidelink" is used to represent that the transmission direction of the signal or data is a third direction sent from a user equipment 1 to a user equipment 2. For example, a "downlink signal" represents that the signal is transmitted in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. In addition, in this context, the character "/" generally indicates that the anterior and posterior associated objects are in a kind of "or" relationship.

FIG. 12 is a first schematic diagram of the compositional structure of an apparatus for determining terminal type according to an embodiment of the disclosure. The apparatus is applied to a first terminal. As illustrated in FIG. 12, the apparatus includes a sending unit 1201.

The sending unit 1201 is configured to send a first signal on a first time unit. The first time unit is used for a reduced capability terminal to send the first signal, and the first terminal is a terminal in a sidelink system.

In some implementations, the first information includes at least one of: first indication information, or first terminal capability information.

The first indication information is for indicating that the first terminal is the reduced capability terminal.

The first terminal capability information includes one or more pieces of capability information of the first terminal.

In some implementations, the first terminal capability information includes at least one of: a modulation order supported by the first terminal; a maximum modulation order supported by the first terminal; a bandwidth supported by the first terminal; a maximum bandwidth supported by the first terminal; a number of antennas supported by the first terminal; or a number of MIMO streams supported by the first terminal.

In some implementations, the first information is carried in first signaling. The first signaling includes one or more of SCI or an MAC CE.

In some implementations, the MAC CE has a corresponding priority that is determined based on at least one of: protocol predefined information, preconfigured information, or network configured information.

In some implementations, the first signaling is carried in a first physical sidelink channel, and the first physical sidelink channel includes a PSCCH and/or a PSSCH; and/or the first signaling is transmitted in a first slot.

In some implementations, the first physical sidelink channel is also used to carry the unicast link related information; and/or the unicast link related information is also transmitted in the first slot.

In some implementations, the unicast link related information is the DCR information. Alternatively, the unicast link related information is the DCA information.

In some implementations, all of the first information is carried in an MAC CE; or a portion of the first information is carried in an SCI, and another portion of the first information is carried in an MAC CE; or all of the first information is carried in an SCI.

In some implementations, the first information is carried in PCS-RRC signaling.

In some implementations, physical resources for transmitting the first information are scheduled by a network; or physical resources for transmitting the first information are selected by the first terminal.

In some implementations, the first signal is an S-SSB.

In some implementations, the first signal is not used in the synchronization process.

In some implementations, the first time unit includes one or more first time domain resources, and the first time domain resources are used to transmit the first signal.

In some implementations, the first time unit is contained in a sidelink resource pool.

In some implementations, the first time unit has configuration information including at least one of: first information, second information or third information.

The first information is for determining a length of a period.

The second information is for determining one or more sets of resources within a period.

The third information is for determining resources belonging to the first time unit in at least one set of resources within a period.

In some implementations, the third information includes at least one of: a first parameter, a second parameter or a third parameter.

The first parameter is for indicating a number of first time domain resources contained in each of the at least one set of resources.

The second parameter is for indicating an index of an initial first time domain resource contained in each of the at least one set of resources.

The third parameter is for indicating a time interval between two adjacent first time domain resources within each of the at least one set of resources.

The first time domain resources belong to the first time unit.

In some implementations, the first time unit has configuration information including at least one of: first information or fourth information.

The first information is for determining a length of a period.

The fourth information is for determining a set of resources within a period, and resources in the set of resources belong to the first time unit.

In some implementations, the fourth information includes at least one of: a fourth parameter, a fifth parameter or a sixth parameter.

The fourth parameter is for indicating a number of first time domain resources contained in the set of resources.

The fifth parameter is for indicating a time offset of an initial first time domain resource in the set of resources relative to boundary of the period.

The sixth parameter is for indicating a time interval between two adjacent first time domain resources in the set of resources.

In some implementations, the time offset and/or the time interval are/is in units of slots.

In some implementations, the configuration information of the first time unit further includes fifth information, and the fifth information is for determining a period interval between two adjacent periods containing the first time unit.

In some implementations, the configuration information of the first time unit is determined based on at least one of preconfigured information or network configured information.

It is to be understood by those skilled in the art that the related description of the aforementioned apparatus for determining terminal type in the embodiments of the disclosure may be understood with reference to the related description of the method for determining terminal type in the embodiments of the disclosure.

FIG. 13 is a second schematic diagram of the compositional structure of an apparatus for determining terminal type according to an embodiment of the disclosure. The apparatus is applied to a second terminal. As illustrated in FIG. 13, the apparatus includes a receiving unit 1301.

The receiving unit 1301 is configured to receive a first signal on a first time unit. The first time unit is used for a reduced capability terminal to send the first signal, and the second terminal is a terminal in a sidelink system.

In some implementations, the first information includes at least one of: first indication information, or first terminal capability information.

The first indication information is for indicating that the first terminal is the reduced capability terminal.

The first terminal capability information includes one or more pieces of capability information of the first terminal.

In some implementations, the first terminal capability information includes at least one of: a modulation order supported by the first terminal; a maximum modulation order supported by the first terminal; a bandwidth supported by the first terminal; a maximum bandwidth supported by the first terminal; a number of antennas supported by the first terminal; or a number of MIMO streams supported by the first terminal.

In some implementations, the first information is carried in first signaling. The first signaling includes one or more of SCI or an MAC CE.

In some implementations, the MAC CE has a corresponding priority that is determined based on at least one of: protocol predefined information, preconfigured information, or network configured information.

In some implementations, the first signaling is carried in a first physical sidelink channel, and the first physical sidelink channel includes a PSCCH and/or a PSSCH; and/or the first signaling is transmitted in a first slot.

In some implementations, the first physical sidelink channel is also used to carry the unicast link related information; and/or the unicast link related information is also transmitted in the first slot.

In some implementations, the unicast link related information is the DCR information. Alternatively, the unicast link related information is the DCA information.

In some implementations, all of the first information is carried in an MAC CE; or a portion of the first information is carried in an SCI, and another portion of the first information is carried in an MAC CE; or all of the first information is carried in an SCI.

In some implementations, the first information is carried in PCS-RRC signaling.

In some implementations, the first signal is an S-SSB.

In some implementations, the first signal is not used in the synchronization process.

In some implementations, the first time unit includes one or more first time domain resources, and the first time domain resources are used to transmit the first signal.

In some implementations, the first time unit is contained in a sidelink resource pool.

In some implementations, the first time unit has configuration information including at least one of: first information, second information or third information.

The first information is for determining a length of a period.

The second information is for determining one or more sets of resources within a period.

The third information is for determining resources belonging to the first time unit in at least one set of resources within a period.

In some implementations, the third information includes at least one of: a first parameter, a second parameter or a third parameter.

The first parameter is for indicating a number of first time domain resources contained in each of the at least one set of resources.

The second parameter is for indicating an index of an initial first time domain resource contained in each of the at least one set of resources.

The third parameter is for indicating a time interval between two adjacent first time domain resources within each of the at least one set of resources.

The first time domain resources belong to the first time unit.

In some implementations, the first time unit has configuration information including at least one of: first information or fourth information.

The first information is for determining a length of a period.

The fourth information is for determining a set of resources within a period, and resources in the set of resources belong to the first time unit.

In some implementations, the fourth information includes at least one of: a fourth parameter, a fifth parameter or a sixth parameter.

The fourth parameter is for indicating a number of first time domain resources contained in the set of resources.

The fifth parameter is for indicating a time offset of an initial first time domain resource in the set of resources relative to boundary of the period.

The sixth parameter is for indicating a time interval between two adjacent first time domain resources in the set of resources.

In some implementations, the time offset and/or the time interval are/is in units of slots.

In some implementations, the configuration information of the first time unit further includes fifth information, and the fifth information is for determining a period interval between two adjacent periods containing the first time unit.

In some implementations, the configuration information of the first time unit is determined based on at least one of preconfigured information or network configured information.

It is to be understood by those skilled in the art that the related description of the aforementioned apparatus for determining terminal type in the embodiments of the disclosure may be understood with reference to the related description of the method for determining terminal type in the embodiments of the disclosure.

FIG. 14 is a schematic structural illustration of a communication device 1400 according to an embodiment of the disclosure. The communication device 1400 illustrated in FIG. 14 includes a processor 1410 that may invoke and execute a computer program from a memory to implement each of the methods in the embodiments of the disclosure.

As illustrated in FIG. 14, the communication device 1400 may further include a memory 1420. The processor 1410 may invoke and execute a computer program from the memory 1420 to implement each of the methods in the embodiments of the disclosure.

The memory 1420 may be a separate device independent of the processor 1410, or may be integrated in the processor 1410.

Optionally, as illustrated in FIG. 14, the communication device 1400 may further include a transceiver 1430, and the processor 1410 may control the transceiver 1430 to communicate with other devices. Specifically, the transceiver may transmit information or data to other devices, or receive information or data from other devices.

The transceiver 1430 may include a transmitter and a receiver. The transceiver 1430 may further include one or more antennas.

The communication device 1400 may specifically be the terminal in the embodiments of the disclosure, and the communication device 1200 may implement corresponding processes implemented by the terminal in each of the methods in the embodiments of the disclosure, which will not be repeated herein for the sake of simplicity.

FIG. 15 is a schematic structural diagram of a chip according to an embodiment of the disclosure. The chip 1500 illustrated in FIG. 15 includes a processor 1510 that may invoke and execute a computer program from a memory to implement each of the methods in the embodiments of the disclosure.

As illustrated in FIG. 15, the chip 1500 may further include a memory 1520. The processor 1510 may invoke and execute a computer program from the memory 1520 to implement each of the methods in the embodiments of the disclosure.

The memory 1520 may be a separate device independent of the processor 1510, or may be integrated in the processor 1510.

Optionally, the chip 1500 may further include an input interface 1530. The processor 1510 may control the input interface 1530 to communicate with other devices or chips. Specifically, the input interface 1230 may acquire information or data from other devices or chips.

Optionally, the chip 1500 may further include an output interface 1540. The processor 1510 may control the output interface 1540 to communicate with other devices or chips. Specifically, the output interface 90 may output information or data to other devices or chips.

The chip may be applied to the terminal in the embodiments of the disclosure, and the chip may implement corresponding processes implemented by the terminal in each of the methods in the embodiments of the disclosure. For brevity, details will not be repeated herein again.

It should be understood that the chip mentioned in the embodiments of the disclosure may also be referred to as a system-level chip, a system chip, a chip system, or a system-on-chip, etc.

It is to be understood that the processor in the embodiment of the disclosure may be an integrated circuit chip with a signal processing capability. In implementation, the operations of the above method embodiments may be accomplished by an integrated logic circuit of the hardware in the processor or the instructions in the form of software. The processor described above may be a general-purpose processor, a digital signal processor (DSP), an application specific integrated circuit (ASIC), a field programmable gate array (FPGA) or another programmable logic device, a discrete gate or transistor logic device, or a discrete hardware component. Various methods, operations and logic block diagrams disclosed in the embodiments of the disclosure may be implemented or performed. The general-purpose processor may be a microprocessor, or any conventional processor or the like. The operations of the methods disclosed in the embodiments of the disclosure may be directly embodied to be executed and completed by a hardware decoding processor, or by a combination of hardware in the decoding processor and software modules. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with its hardware.

It is understood that, in the embodiment of the disclosure, the memory may be a volatile memory or a non-volatile memory, or may include both the volatile memory and the non-volatile memory. The non-volatile memory may be an ROM, a PROM, an erasable PROM (EPROM), an electrically EPROM (EEPROM), or a flash memory. The volatile memory may be an RAM, which serves as an external high-speed cache. It is exemplarily but unlimitedly described that RAMs in various forms may be adopted, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DRRAM). It is to be noted that the memories of the systems and methods described herein is intended to include, but not limited to, memories of these and any other suitable types.

It is to be understood that the aforementioned memory is described only exemplarily rather than limitedly. For example, the memory in the embodiments of the disclosure may further be an SRAM, a DRAM, an SDRAM, a DDR SDRAM, an ESDRAM, an SLDRAM and a DR RAM, etc. That is to say, the memory in the embodiments of the disclosure is intended to include, but not limited to, memories of these and any other suitable types.

In the embodiments of the disclosure, a computer-readable storage medium for storing a computer program is further provided. The computer-readable storage medium may be applied to the terminal in the embodiments of the disclosure, and the computer program is executed to enable the computer to execute corresponding processes implemented by the terminal in each of the methods in the embodiments of the disclosure. For brevity, details will not be repeated herein again.

In the embodiment of the disclosure, a computer program product including computer program instructions is further provided. The computer program product may be applied to the terminal in the embodiments of the disclosure, and the computer program instructions cause the computer to execute corresponding processes implemented by the terminal in each of methods in the embodiments of the disclosure. For brevity, details will not be repeated herein again.

In the embodiment of the disclosure, a computer program is further provided. The computer program may be applied to the terminal in the embodiments of the disclosure. The computer program, when executed by a computer, causes the computer to execute corresponding processes implemented by the terminal in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection that is implemented through some interfaces, devices or units, and may be an electrical or mechanical connection or in other forms.

The units described as separate components may or may not be physically separate, and the components displayed as units may or may not be physical units, that is, they may be located in one place or may be distributed to multiple network units. Part or all of the units may be selected based on the actual needs to achieve the purpose of the solution of the present embodiment.

In addition, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that contributes to the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

## Claims

1. A method for determining terminal type, comprising
sending (701), by a first terminal, a first signal on a first time unit to a second terminal, wherein the first time unit is a sidelink synchronization resource that is additionally configured, and the first time unit is used for the first terminal to send the first signal only when the first terminal is a reduced capability terminal, the first signal is used for the second terminal to determine that the first terminal is a reduced capability terminal, and the first terminal is a terminal in a sidelink system.

2. The method of claim 1, wherein the first time unit comprises one or more first time domain resources, and the first time domain resources are used to transmit the first signal.

3. The method of claim 1 or 2, wherein the first time unit is contained in a sidelink resource pool.

4. A method for determining terminal type, comprising
receiving (702), by a second terminal, a first signal on a first time unit from a first terminal, wherein the first time unit is a sidelink synchronization resource that is additionally configured, the first time unit is used for the first terminal to send the first signal only when the first terminal is a reduced capability terminal,
determining, by the second terminal, that the first terminal is the reduced capability terminal based on the first signal, wherein the second terminal is a terminal in a sidelink system.

5. An apparatus for determining terminal type, applied to a first terminal, the apparatus comprising:
a sending unit (1201), configured to send a first signal on a first time unit to a second terminal, wherein the first time unit is sidelink synchronization resources that are additionally configured, the first time unit is used for the first terminal to send the first signal only when the first terminal is a reduced capability terminal, the first signal is used for the second terminal to determine that the first terminal is a reduced capability terminal, and the first terminal is a terminal in a sidelink system.

6. An apparatus for determining terminal type, applied to a second terminal, the apparatus comprises:
a receiving unit (1301), configured to receive a first signal on a first time unit from a first terminal, wherein the first time unit is sidelink synchronization resources that are additionally configured, the first time unit is used for the first terminal to send the first signal only when the first terminal is a reduced capability terminal, the first signal is used for the second terminal to determine that the first terminal is the reduced capability terminal, and the second terminal is a terminal in a sidelink system.

7. A terminal (1400), comprising: a processor (1410), and a memory (1420) for storing a computer program, wherein the processor (1410) is configured to invoke and execute the computer program stored in the memory (1420) to perform the method of any one of claims 1 to 3 or the method of claim 4.

8. A chip (1500), comprising a processor (1510) configured to invoke and execute a computer program from a memory (1520), to cause a terminal on which the chip (1500) is mounted to perform the method of any one of claims 1 to 3 or the method of claim 4.

9. A computer-readable storage medium for storing a computer program that, when executed by a computer, causes a terminal installed with the computer to perform the method of any one of claims 1 to 3 or the method of claim 4.

## Patentansprüche

1. Verfahren zum Bestimmen eines Endgerätetyps, umfassend:
Senden (701) durch ein erstes Endgerät, eines ersten Signals auf einer ersten Zeiteinheit an ein zweites Endgerät, wobei die erste Zeiteinheit eine Sidelink-Synchronisationsressource ist, die zusätzlich konfiguriert ist, und die erste Zeiteinheit nur dann verwendet wird, damit das erste Endgerät das erste Signal sendet, wenn das erste Endgerät ein Endgerät mit reduzierter Leistungsfähigkeit ist, das erste Signal verwendet wird, damit das zweite Endgerät feststellt, dass das erste Endgerät ein Endgerät mit reduzierter Leistungsfähigkeit ist, und das erste Endgerät ein Endgerät in einem Sidelink-System ist.

2. Verfahren nach Anspruch 1, wobei die erste Zeiteinheit eine oder mehrere erste Zeitbereichsressourcen umfasst und die ersten Zeitbereichsressourcen verwendet werden, um das erste Signal zu übertragen.

3. Verfahren nach Anspruch 1 oder 2, wobei die erste Zeiteinheit in einem Sidelink-Ressourcenpool enthalten ist.

4. Verfahren zum Bestimmen eines Endgerätetyps, umfassend:
Empfangen (702), durch ein zweites Endgerät, eines ersten Signals auf einer ersten Zeiteinheit von einem ersten Endgerät, wobei die erste Zeiteinheit eine Sidelink-Synchronisationsressource ist, die zusätzlich konfiguriert ist, die erste Zeiteinheit nur dann verwendet wird, damit das erste Endgerät das erste Signal sendet, wenn das erste Endgerät ein Endgerät mit reduzierter Leistungsfähigkeit ist,
Feststellen, durch das zweite Endgerät, dass das erste Endgerät das Endgerät mit reduzierter Leistungsfähigkeit ist, auf Grundlage des ersten Signals, wobei das zweite Endgerät ein Endgerät in einem Sidelink-System ist.

5. Einrichtung zum Bestimmen eines Endgerätetyps, die auf ein erstes Endgerät angewendet wird, wobei die Einrichtung Folgendes umfasst:
eine Sendeeinheit (1201), die dafür konfiguriert ist, ein erstes Signal auf einer ersten Zeiteinheit an ein zweites Endgerät zu senden, wobei die erste Zeiteinheit Sidelink-Synchronisationsressourcen sind, die zusätzlich konfiguriert sind, die erste Zeiteinheit nur dann verwendet wird, damit das erste Endgerät das erste Signal sendet, wenn das erste Endgerät ein Endgerät mit reduzierter Leistungsfähigkeit ist, das erste Signal verwendet wird, damit das zweite Endgerät feststellt, dass das erste Endgerät ein Endgerät mit reduzierter Leistungsfähigkeit ist, und das erste Endgerät ein Endgerät in einem Sidelink-System ist.

6. Einrichtung zum Bestimmen eines Endgerätetyps, die auf ein zweites Endgerät angewendet wird,
wobei die Einrichtung Folgendes umfasst:
eine Empfangseinheit (1301), die dafür konfiguriert ist, ein erstes Signal von einem ersten Endgerät auf einer ersten Zeiteinheit zu empfangen, wobei die erste Zeiteinheit Sidelink-Synchronisationsressourcen sind, die zusätzlich konfiguriert sind, die erste Zeiteinheit nur dann verwendet wird, damit das erste Endgerät das erste Signal sendet, wenn das erste Endgerät ein Endgerät mit reduzierter Leistungsfähigkeit ist, das erste Signal verwendet wird, damit das zweite Endgerät feststellt, dass das erste Endgerät das Endgerät mit reduzierter Leistungsfähigkeit ist, und das zweite Endgerät ein Endgerät in einem Sidelink-System ist.

7. Endgerät (1400), umfassend: einen Prozessor (1410) und einen Speicher (1420) zum Speichern eines Computerprogramms, wobei der Prozessor (1410) dafür konfiguriert ist, das in dem Speicher (1420) gespeicherte Computerprogramm aufzurufen und auszuführen, um das Verfahren nach einem der Ansprüche 1 bis 3 oder das Verfahren nach Anspruch 4 durchzuführen.

8. Chip (1500), umfassend einen Prozessor (1510), der dafür konfiguriert ist, ein Computerprogramm aus einem Speicher (1520) aufzurufen und auszuführen, um ein Endgerät, auf dem der Chip (1500) montiert ist, dazu zu veranlassen, das Verfahren nach einem der Ansprüche 1 bis 3 oder das Verfahren nach Anspruch 4 durchzuführen.

9. Computerlesbares Speichermedium zum Speichern eines Computerprogramms, das, wenn es von einem Computer ausgeführt wird, ein mit dem Computer installiertes Endgerät veranlasst, das Verfahren nach einem der Ansprüche 1 bis 3 oder das Verfahren nach Anspruch 4 durchzuführen.

## Revendications

1. Procédé de détermination de type de terminal, comprenant :
l'envoi (701), par un premier terminal, d'un premier signal sur une première unité de temps à un second terminal, dans lequel la première unité de temps est une ressource de synchronisation de liaison latérale qui est de plus configurée, et la première unité de temps est utilisée pour que le premier terminal envoie le premier signal uniquement lorsque le premier terminal est un terminal à capacité réduite, le premier signal est utilisé pour que le second terminal détermine que le premier terminal est un terminal à capacité réduite, et le premier terminal est un terminal dans un système de liaison latérale.

2. Procédé selon la revendication 1, dans lequel la première unité de temps comprend une ou plusieurs premières ressources de domaine temporel, et les premières ressources de domaine temporel sont utilisées pour transmettre le premier signal.

3. Procédé selon la revendication 1 ou 2, dans lequel la première unité de temps est contenue dans un ensemble de ressources de liaison latérale.

4. Procédé de détermination de type de terminal, comprenant :
la réception (702), par un second terminal, d'un premier signal sur une première unité de temps à partir d'un premier terminal, dans lequel la première unité de temps est une ressource de synchronisation de liaison latérale qui est de plus configurée, la première unité de temps est utilisée pour que le premier terminal envoie le premier signal uniquement lorsque le premier terminal est un terminal à capacité réduite,
la détermination, par le second terminal, que le premier terminal est le terminal à capacité réduite sur la base du premier signal, dans lequel le second terminal est un terminal dans un système de liaison latérale.

5. Appareil de détermination de type de terminal, appliqué à un premier terminal, l'appareil comprenant :
une unité d'envoi (1201), configuré pour envoyer un premier signal sur une première unité de temps à un second terminal, dans lequel la première unité de temps est des ressources de synchronisation de liaison latérale qui sont de plus configurées, la première unité de temps est utilisée pour que le premier terminal envoie le premier signal uniquement lorsque le premier terminal est un terminal à capacité réduite, le premier signal est utilisé pour que le second terminal détermine que le premier terminal est un terminal à capacité réduite, et le premier terminal est un terminal dans un système de liaison latérale.

6. Appareil de détermination de type de terminal, appliqué à un second terminal,
l'appareil comprend :
une unité de réception (1301), configuré pour recevoir un premier signal sur une première unité de temps à partir d'un premier terminal, dans lequel la première unité de temps est des ressources de synchronisation de liaison latérale qui sont de plus configurées, la première unité de temps est utilisée pour que le premier terminal envoie le premier signal uniquement lorsque le premier terminal est un terminal à capacité réduite, le premier signal est utilisé pour que le second terminal détermine que le premier terminal est le terminal à capacité réduite, et le second terminal est un terminal dans un système de liaison latérale.

7. Terminal (1400), comprenant : un processeur (1410) et une mémoire (1420), pour stocker un programme informatique, dans lequel le processeur (1410) est configuré pour appeler et exécuter le programme informatique stocké dans la mémoire (1420) de façon à réaliser le procédé selon l'une quelconque des revendications 1 à 3 ou le procédé selon la revendication 4.

8. Puce (1500), comprenant un processeur (1510) configuré appeler et exécuter un programme informatique à partir d'une mémoire (1520), pour amener un terminal sur lequel la puce (1500) est montée à exécuter le procédé selon l'une des revendications 1 à 3 ou le procédé selon la revendication 4.

9. Support de stockage lisible par ordinateur destiné à stocker un programme informatique qui, lorsqu'il est exécuté par un ordinateur, amène un terminal installé avec l'ordinateur à exécuter le procédé selon l'une des revendications 1 à 3 ou le procédé selon la revendication 4.
